# EUROPÄISCHE PATENTSCHRIFT

(11) **EP 3 435 115 B1**
(45) Veröffentlichungstag und Bekanntmachung des Hinweises auf die Patenterteilung: **04.12.2019**
(21) Anmeldenummer: 18182731.2
(22) Anmeldetag: 10.07.2018
(51) Int. Cl.: G01S 13/04, B07C 5/00, B65G 43/08, G01V 3/08, G01V 3/12, G01S 13/74

(54) **SENSOR FÜR EINE FÖRDEREINRICHTUNG**
SENSOR FOR A CONVEYOR
CAPTEUR POUR UN DISPOSITIF DE TRANSPORT

(30) Priorität: 28.07.2017 DE 102017117085
(43) Veröffentlichungstag der Anmeldung: 30.01.2019
(73) Patentinhaber: Sick AG, 79183 Waldkirch (DE)
(72) Erfinder: Prinz, Oliver, 79104 Freiburg (DE); Kern, Simon, 79348 Freiamt (DE); Kolb, Stephan, 79106 Freiburg (DE)

(56) Entgegenhaltungen:
- EP-A1- 3 138 792
- WO-A1-2016/000685
- DE-A1-102010 020 531
- DE-U1-202008 006 910
- US-B1- 9 233 799

## Beschreibung

Die Erfindung betrifft einen Sensor für eine Fördereinrichtung und ein Verfahren zum Erfassen von Objekten auf einer Fördereinrichtung.

In zahlreichen Logistikanwendungen sollen geförderte Güter gezielt an einen bestimmten Ort transportiert werden. Dafür werden Objekte als Objektstrom auf einem Förderer bewegt und gezielt und automatisiert an bestimmten Punkten ausgeschleust. Es ist vorteilhaft, die Objekte einzeln zu fördern. In einem Schalensortierer sind Schalen (Trays) vorgesehen, die jeweils ein Objekt aufnehmen und dann bei Passieren der zugewiesenen Position das Objekt abwerfen. Ein Crossbelt-Sortierer weist jeweils Gurtabschnitte auf, die quer zur Hauptfördereinrichtung bewegt werden können, um das geförderte Objekt an der Zielposition aus dem Objektstrom herauszunehmen. Derartige Abschnitte, wie eine Schale oder ein Crossbelt, werden nachfolgend auch als Fächer bezeichnet.

Eine Kameraüberwachung unterstützt die Steuerung eines solchen Förderers und stellt die korrekte Funktion sicher. Die Kamerabilder dienen dazu, die Fachbelegung einschließlich einer Doppelbelegung, die Lage von Objekten sowie eventuellen Überstand zu erkennen oder auch Länge, Breite und Höhe des Objekts zu vermessen. Auch ein Tracking des Objekts über die Förderbewegung ist zumindest in begrenztem Umfang möglich. Mit solchen Daten wird das genaue Abwerfen oder Abkippen gesteuert und kontrolliert, dass das Objekt tatsächlich die vorgesehene Position erreicht hat.

Es wäre zu teuer, die einzelnen Fächer mit jeweils einer Kamera zu überwachen. Stattdessen befindet sich eine Kamera an einem relevanten Abschnitt des Förderers, wie einem Zuführungs- oder Ausschleusebereich, welche die vorbeifahrenden Objekte aufnimmt. Das hat mehrere Nachteile: Das jeweilige Kamerabild muss einem Fach zugeordnet werden, und dieser Prozess ist fehleranfällig und zumindest aufwändig. Denn letztlich gewinnt eine Kamera zu viel Bildinformation, die mühsam durch Bildverarbeitung auf sehr wenig relevante Anwesenheits- und Lageinformation heruntergerechnet werden muss. Je höher die Fördergeschwindigkeit, umso schwieriger ist es, überhaupt alle erforderlichen Bilder in ausreichender Qualität aufzunehmen. Bestenfalls wird der Zustand zum Zeitpunkt der Bildaufnahme erfasst, spätere Änderungen bleiben unbemerkt. Um alle oben genannten Objektdaten zu gewinnen, sind vielfach mehrere Sensoren, wie 3D-Profiler, Laserscanner, Entfernungsmesser und Lichtschranken erforderlich, die miteinander kombiniert und verrechnet werden. Die Sensoranordnung wiederholt sich, falls es an dem Förderer mehrere relevante zu überwachende Bereiche gibt.

Die US 6 460 681 B1 befasst sich mit einem Schalensortierer, bei dem die Belegung optisch überwacht wird.

In der US 9 476 757 B2 ist ein kraftempfindlicher Sensor an der Außenfläche des Gurtes eines Förderers angeordnet, um das Gewicht der geförderten Objekte zu bestimmen. Damit werden aber nur Zusatzinformationen gewonnen, die Artikel werden über ein Visionsystem mit einer Kamera erfasst. Das Gewicht wäre auch kein geeignetes Kriterium, um die oben genannten Erfassungsaufgaben zu erfüllen. Eine korrekte Fachbelegung könnte auch gar nicht überwacht werden, da in der US 9 476 757 B2 ein durchgehender Gurt ohne solche Fächer eingesetzt ist.

Aus der US 9 233 799 B1 ist ein weiterer Förderer bekannt, der ebenfalls keine einzelnen Fächer vorsieht. An dem Gurt des Förderers sind Sensormatten angeordnet, deren Funktionsprinzip nicht näher erklärt wird.

Die WO 2016/000685 A1 beschreibt einen Sensor für eine Rolle eines Rollenförderers, der mit Hilfe von Hochfrequenzsignalen die Anwesenheit von Objekten auf der Rollenbahn erkennt.

Die DE 20 2008 006 910 U1 offenbart einen selbstfahrenden Transportroboter mit Kippvorrichtung, der mittels autonomer Intelligenz selbständig auf einem Schienensystem verfährt. Der Transportroboter erkennt nach der Übergabe des auf seiner Kippplattform beförderten Gegenstands mit einem Drucksensor die leere Oberfläche der Kippplattform.

Es ist daher Aufgabe der Erfindung, die Überwachung eines Förderers mit einzelnen Fächern zu verbessern.

Diese Aufgabe wird durch einen Sensor und ein Verfahren zum Erfassen von Objekten nach Anspruch 1 beziehungsweise 12 gelöst. Die Fördereinrichtung ähnelt im Grundaufbau einem Fließband, das sich in einer gemeinsamen Förderrichtung bewegt, weist jedoch einzelne Förderelemente oder Fächer auf. Die Förderelemente besitzen eine Ausschleuseeinrichtung, d.h. eine Aktorik, mit der auf Befehl, meist an einer definierten Zielposition, das Objekt auf dem Förderelement aus dem Objektstrom ausgeschleust werden kann. Der Sensor umfasst ein Sensorelement, das in die Fördereinrichtung integriert ist, und eine Auswertungseinheit für dessen Signale.

Die Erfindung geht von dem Grundgedanken aus, das Sensorelement direkt mit einem Förderelement zu verbinden. Anders als eine herkömmliche Kamera wird folglich nicht eine bestimmte Position an der Fördereinrichtung überwacht, sondern das Förderelement selbst durch ein integriertes Sensorelement, dass in dieser Anordnung zwangsläufig die Förderbewegung mitvollzieht. Bei dem Sensorelement handelt es sich um einen Resonator zum Erfassen einer Mikrowellenresonanz oder eine kapazitive Elektrode. Damit wird zumindest erkannt, ob ein Förderelement ein Objekt trägt oder nicht. Je nach Ausführungsform lassen sich weitere Informationen über das Objekt und dessen Position erfassen.

Die Erfindung hat den Vorteil, dass die Belegung der Fördereinrichtung kontinuierlich und zuverlässig erkannt wird. Auch eine Positionsbestimmung und Klassifikation der Objekte ist möglich. Durch Integration des Sensorelements in ein Förderelement wird ein nur minimaler Montageaufwand ohne zusätzlichen Platzbedarf erreicht, wobei zugleich der Sensor vor äußeren Einflüssen geschützt ist. Dafür ist ein Mikrowellen- oder Hochfrequenz-Resonator für die Erfassung einer Mikrowellenresonanz besonders geeignet. Zugleich liefert ein Sensor mit diesen Messprinzipien die erforderlichen Daten, obwohl er einfach aufgebaut ist und mit nur geringem Messaufwand auskommt. Im Gegensatz zu optischen Sensoren ist der Sensor unempfindlich gegen Staub und Verunreinigungen.

Auch die Auswertungseinheit ist bevorzugt in das Förderelement integriert. Dadurch wird eine besonders kompakte Anordnung erzielt, die auch weniger Anschlussaufwand benötigt.

Die Fördereinrichtung ist bevorzugt ein Crossbelt-Sortierer, dessen Förderelemente einen Gurt für eine Bewegung quer zu einer Bewegungsrichtung der Fördereinrichtung aufweisen. Ein Crossbelt-Sortierer wurde einleitend kurz vorgestellt und ist ein besonders paxisrelevantes Beispiel für eine Fördereinrichtung mit einzelnen Förderelementen oder Fächern.

Das Sensorelement ist bevorzugt unter dem Gurt angeordnet. Damit ist es auf einfache Weise in das Förderelement integriert und befindet sich in einer besonders geeigneten Detektionsposition.

Die Fördereinrichtung ist bevorzugt ein Schalensortierer, dessen Förderelemente eine Schale (tray) aufweisen. Das ist ein weiteres einleitend genanntes Beispiel einer in der Praxis häufig verwendeten Fördereinrichtung mit einzelnen Förderelementen oder Fächern. Die Schalen sind kippbar, um ein Objekt an der Zielposition auszuschleusen.

Das Sensorelement bildet bevorzugt zumindest einen Teil der Auflagefläche der Schale. Damit befindet es sich nah an dem zu erfassenden Objekt und ist zugleich einfach in die Schale integrierbar. Vorzugsweise wird das Sensorelement noch durch eine dielektrische Schicht gegen Abrieb und ähnliche Gebrauchsspuren geschützt.

Das Sensorelement weist bevorzugt eine Flexleiterplatine auf. Damit lassen sich auf einfache Weise auch komplexere Strukturen der Resonatoren beziehungsweise kapazitiven Elektroden herstellen. Die Flexleiterplatine ermöglicht weiterhin die Integration in ein Förderelement in der gewünschten Anordnung.

Das Sensorelement weist bevorzugt mindestens eine mäandrierende oder ineinander verzahnte leitende Struktur auf. Dadurch kann kostengünstig eine größere Fläche mit relativ wenig leitender Struktur abgedeckt werden. Außerdem wird eine besonders empfindliche und damit zuverlässige Detektion möglich.

Das Sensorelement weist bevorzugt mehrere Resonatoren oder Elektroden auf. Dabei handelt es sich beispielsweise um eine regelmäßige oder unregelmäßige Linien- oder Matrixanordnung. Die Mehrfachanordnung erlaubt es, mehrere Signale für eine Größen- und Positionsauflösung von Objekten zu erfassen.

Das Sensorelement ist bevorzugt flach und weist eine Ausdehnung entsprechend einem Anteil von zumindest 20 % oder zumindest 50 % der Fläche des Förderelements auf. Ein Sensorelement mit sehr geringer Dicke ist einfach in das Förderelement integrierbar. Ein großflächiges, an das Förderelement angepasstes Sensorelement dient einer besonders genauen Objekterfassung insbesondere hinsichtlich Abmessungen und Position. Die Fläche des Sensorelements kann im Wesentlichen insgesamt derjenigen des Förderelements entsprechen, zumindest aber einem substanziellen Anteil von zumindest 20 %, 50 % oder sogar 75 % und mehr.

Der Sensor umfasst bevorzugt eine in das Förderelement integrierte RFID-Leseeinrichtung zum Kommunizieren mit RFID-Transpondern über ein RFID-Signal. Dazu ist eine vorzugsweise seitlich am Förderelement angeordnete Antenne vorgesehen. Womöglich lässt sich auch das Sensorelement als RFID-Antenne nutzen. Der Sensor ist damit in der Lage, RFID-Informationen zu erfassen, einerseits um mehr über die geförderten Objekte zu erfahren, insbesondere aber auch ergänzend zur Beleg- und Positionskontrolle von Förderelementen. Es wäre sogar denkbar, dies allein mittels RFID zu lösen, also auf ein Sensorelement und eine Auswertung für Mikrowellenresonanz oder kapazitive Erfassung zu verzichten. Als weitere Alternative ist denkbar, eine RFID-Lesevorrichtung nicht fest einem Förderelement zuzuordnen, sondern wie herkömmliche Kameras an einer Position der Fördereinrichtung zu montieren.

An den Förderelementen ist bevorzugt mindestens ein Positions-RFID-Transponder angeordnet, wobei die Auswertungseinheit dafür ausgebildet ist, anhand des RFID-Signals mindestens eine Orts- und/oder Geschwindigkeitsgröße eines RFID-Transponders zu bestimmen, um mit Hilfe der Positions-RFID-Transponder festzustellen, ob sich ein gelesener, an einem Objekt befindlicher Objekt-RFID-Transponder auf dem Förderelement befindet. In dieser Ausführungsform ist die RFID-Leseeinrichtung in der Lage, gelesene RFID-Tags zumindest in einigen Freiheitsgraden der Position beziehungsweise Geschwindigkeit zu lokalisieren. Beispiele dafür sind eine Winkelinformation der Erfassungsrichtung (DoA, Direction of Arrival) insbesondere mittels Phasenverfahren oder ein Leseabstand mittels Signalstärke (RSSI, Received Signal Strength Indicator) oder erneut Phasenmessung. Dann werden derartige Informationen mindestens eines Positions-RFID-Transponders, der als Referenz an dem Förderelement angebracht ist, mit denjenigen eines Objekt-RFID-Transponders verglichen. Beispielsweise liegt ein Positions-RFID-Transponder an einem Rand eines Förderelements, und weiter außen liegende Objekt-RFID-Transponder liegen somit nicht auf dem Förderelement. Ähnlich funktioniert es, wenn der Positions-RFID-Transponder mittig oder beliebig mit bekannten Abständen zu den Rändern angeordnet wird. Eine Geschwindigkeitsinformation reicht allein nicht für eine verlässliche Zuordnung, aber zumindest lassen sich RFID-Transponder mit von der Fördergeschwindigkeit abweichender Geschwindigkeit als für den Sensor nicht relevant ausfiltern.

In vorteilhafter Weiterbildung ist eine als Crossbelt-Sortierer oder Schalensortierer ausgebildete Fördereinrichtung mit einer Vielzahl von Förderelementen jeweils mit einer Ausschleuseeinrichtung zum gezielten Entfernen des Objekts von einem Förderelement vorgesehen, wobei mindestens ein Förderelement einen erfindungsgemäßen Sensor aufweist. Vorzugsweise sind mehrere oder sogar alle Förderelemente mit einem erfindungsgemäßen Sensor ausgerüstet. So kann dann die Anwesenheit für jedes einzelne Förderelement zu jeder Zeit vorzugsweise samt Größe und Position des Objekts erfasst werden, um eine punktgenaue Steuerung für das Ausschleusen zu erzeugen. Auch die Erkennung einer Doppelbelegung ist überall möglich, selbst im einfachsten Fall ohne eine Positionsbestimmung.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Draufsicht auf eine Fördereinrichtung mit in deren Förderelementen integrierten Sensoren;
- Fig. 2: eine schematische Draufsicht auf ein Sensorelement als Antennenanordnung zur Erfassung von Mikrowellenresonanz;
- Fig. 3: eine schematische Draufsicht auf ein Sensorelement als Anordnung von kapazitiven Elektroden; und
- Fig. 4: eine schematische Draufsicht auf ein Förderelement mit integrierter RFID-Leseeinrichtung.

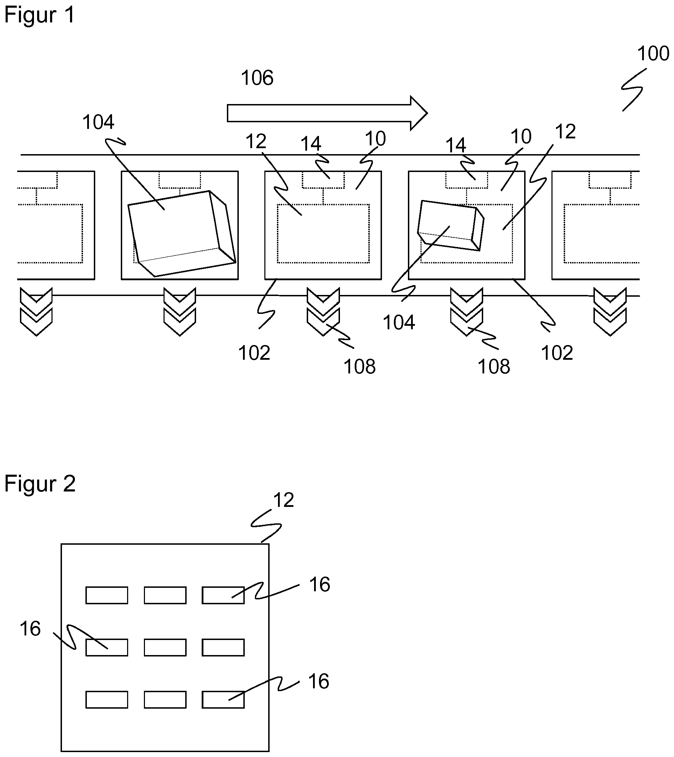

Figur 1 zeigt eine schematische Draufsicht auf eine Fördereinrichtung 100 mit in deren Förderelementen 102 integrierten Sensoren 10. Die Förderelemente 102 sind dazu ausgelegt, jeweils ein Objekt 104 aufzunehmen, so dass auf diese Weise die Objekte 104 in einer gemeinsamen Richtung 106 gefördert werden. Jedes Förderelement weist eine nur durch einen Pfeil 108 angedeutete Aktorik auf, um das Objekt 104 bei Erreichen einer Zielposition in Richtung des Pfeils 108 auszuschleusen. Beispiele für eine derartige Fördereinrichtung sind Crossbelt-Sortierer oder Schalensortierer, in denen die Förderelemente 102 als quer in Richtung des Pfeils 108 beweglicher Gurt oder als kippbare Schale ausgebildet sind.

Die Sensoren 10 haben die Funktion, die Anwesenheit eines Objekts 104 auf dem jeweiligen Förderelement 102 festzustellen und je nach Ausführungsform auch dessen Position und Dimensionen zu bestimmen beziehungsweise eine Doppelbelegung zu erkennen. Dazu umfasst ein Sensor 10 jeweils ein Sensorelement 12 und eine Auswertungseinheit 14, die das Sensorelement 12 ansteuert und dessen Signale auswertet. Die Auswertungseinheit 14 kann abweichend außerhalb des Förderelements 102 angeordnet beziehungsweise für mehrere Sensorelemente 12 zuständig sein.

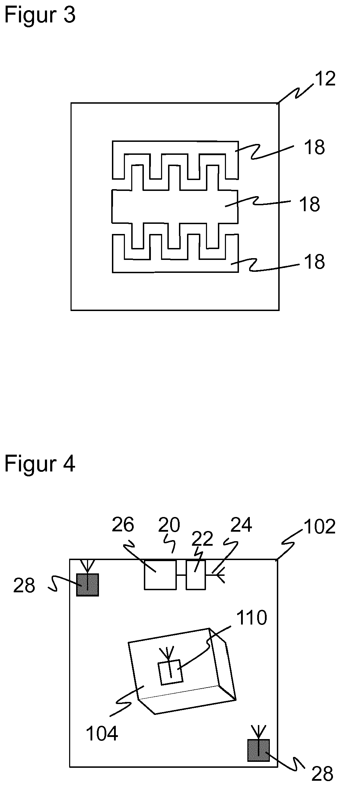

Der verfügbare Platz für Sensoren 10 auf einem Förderelement 102 ist sehr beschränkt. Daher ist das Sensorelement 12 als Detektionsfläche mit möglichst geringer Dicke ausgestaltet. Dann kann es besonders einfach ohne Beeinträchtigung der sonstigen Funktion in das Förderelement 102 integriert werden. Bei einem Schalensortierer beispielsweise wird das Sensorelement 12 unterhalb der Schale oder auf der Schalenoberfläche angeordnet, besonders vorteilhaft in das Schalenmaterial eingesetzt, etwa durch Umspritzen. In einem Crossbelt-Sortierer wird das Sensorelement 12 vorteilhaft unterhalb des Gurtes angeordnet. Wie später noch anhand der Figuren 2 und 3 erläutert, ist es möglich, mehrere aktive Detektionsflächen vorzusehen, um eine Ortsauflösung und damit zusätzliche Informationen über das Objekt 104 zu gewinnen.

Neben den genannten konstruktiven Anforderungen sollte der Sensor 10 durch Verunreinigungen nicht beeinträchtigt werden und beliebige Objekte erkennen. Dafür eignen sich Mikrowellenresonanz und kapazitive Erfassung, die im Anschluss unter Bezugnahme auf die Figur 2 beziehungsweise 3 erläutert werden. Andere Sensorprinzipien zur Anwesenheitserkennung, wie optische Erfassung, Ultraschall oder magnetische und induktive Verfahren, sind dann denkbar, wenn notwendige Bedingungen wie ein transparenter Gurt oder metallische Objekte 104 sichergestellt sind.

Figur 2 zeigt eine Draufsicht auf ein Sensorelement 12 für die Erkennung von Objekten 104 mittels Mikrowellenresonanz. Dazu weist das Sensorelement 12 mindestens einen Resonator 16 auf. Aus Änderungen der Resonanzeigenschaften, insbesondere Resonanzfrequenz und Anpassung, kann die Auswertungseinheit 14 das Objekt 104 erfassen. Die reine Anwesenheit lässt sich schon mit nur einem Resonator 16 erkennen. Werden mehrere Resonatoren 16 verteilt, dann lässt die Anzahl und Position der verstimmten Resonatoren 16 einen Rückschluss auf die Größe, Grundfläche und Position des Objekts zu. Je näher die Resonatoren 16 zueinander angeordnet sind, desto genauer kann die Position bestimmt werden. Figur 2 zeigt beispielhaft neun Resonatoren als Antennen, hier Patchantennen, in regelmäßiger Matrixaordnung. Eine abweichende Anzahl, Resonator- beziehungsweise Antennentechnik und Anordnung ist ebenso möglich.

Unter dem Begriff Mikrowellenresonanz werden hier verschiedene Hochfrequenztechniken zusammengefasst. Der jeweilige Resonator kann in Transmission oder Reflexion eingesetzt sein, wobei mindestens ein Resonator ein Feld auf der Oberseite ausgeprägt. Mögliche Strukturen für Resonatoren 16 sind Filter in Mikrostreifentechnik, ein Hohlraumresonator mit Öffnung oder Schlitz, eine Hohlleiterantenne, jeweils auch dielektrisch gefüllt, oder eine Patchantenne.

Um eine möglichst große Fläche mit einem Element und damit nur einer Messung zu erfassen, kann eine Hochfrequenzleitung eingesetzt werden, die entweder in Reflexion oder Transmission betrieben wird. Beispiele sind hier eine Mikrostreifenleitung, ein Coplanar Waveguide, eine Schlitzleitung, ein Hohlleiter oder ein dielektrischer Wellenleiter. Um mehr Fläche zu füllen, kann die Hochfrequenzleitung mäandrieren. Ändert sich das Dielektrikum um die Leitung herum, ist also ein Objekt anwesend, wird dies in einer Änderung in Amplitude und oder Phase der Reflexion und Transmission ablesbar sein. Alternativ kann eine Laufzeit bestimmt werden, beispielsweise. mit Time Domain Reflectometry (TDR), um die Position des Objekts auf der Leitung zu bestimmen.

Zur Einbettung derartiger Sensorelemente 12 für Mikrowellenresonanz in die Schale eines Schalensortierers werden sie auf oder nahe der Oberfläche der Schale angeordnet. Eine geeignete Grundstruktur hierfür ist eine Flexleiterplatte, auf der die benötigten Strukturen für die Resonatoren 16 oder eine mäandrierende Hochfrequenzleitung mit großer Genauigkeit realisierbar sind. Auf oder in der Nähe der Unterseite der Schale befindet sich vorzugsweise eine durchgehende Massefläche, etwa in Form einer Metallfolie. Das Material der Schale sollte eine möglichst geringe Dielektrizitätskonstante haben, noch wichtiger sind möglichst geringe Verluste im Material. Die Speisung kann durch Mikrostreifenleitungen oder andere Verbindungen an den Rand der Schale verlegt werden, um Löcher in der Schale zu vermeiden. Bei einem Crossbelt-Sortierer werden die Resonatoren möglichst direkt unter dem Gurt mit einem möglichst geringen Abstand angeordnet.

Figur 3 zeigt eine Draufsicht auf ein Sensorelement 12 für die Erkennung von Objekten 104 mittels kapazitiver Erfassung. Dazu werden Kapazitäten auf der Oberfläche des Förderelements 102 angeordnet. Dargestellt sind drei Elektroden 18, die mit Fingern ausgestaltet und ineinander verzahnt sind. Jeweils zwei benachbarte Elektroden 18 bilden eine Kapazität, die sich in Anwesenheit eines Objekts 104 ändert und entsprechend ausgewertet wird. Für die reine Anwesenheitserkennung würden insgesamt zwei Elektroden 18 und damit nur eine Kapazität genügen. Im Beispiel mit drei Elektroden 18 lässt sich unterscheiden, ob das Objekt 104 oben oder unten positioniert ist. Je mehr Kapazitäten auf der Fläche verteilt sind, desto besser lässt sich die Position bestimmen. Die Strukturen, welche die Elektroden 18 bilden, können auf eine beliebig geformte Fläche aufgebracht werden und Objekte 104 mit einem Abstand von mehreren Millimetern zuverlässig detektieren.

Zur Integration einer kapazitiven Objekterfassung in einen Schalensortierer werden vorzugsweise die Elektroden 18 mit einer möglichst dünnen Abdeckschicht auf der Schalenoberfläche angeordnet. Die Dielektrizitätskonstante der Abdeckschicht ist möglichst klein zu wählen, damit das Feld möglichst wenig im Material gebündelt wird. Das Sensorelement 12 kann als Flexleiterplatte mit Strukturen der Elektroden 18 hergestellt sein, welche die Schale auskleidet. Für einen Crossbelt-Sortierer werden die Elektroden 18 direkt unter dem Gurt angeordnet. Der Luftspalt sollte möglichst klein gehalten werden, andererseits auch nicht ganz wegfallen, um den mechanischen Abrieb zu vermeiden.

Figur 4 zeigt eine Draufsicht auf ein Förderelement 102, in das eine RFID-Leseeinrichtung 20 integriert ist. Die RFID-Leseeinrichtung 20 umfasst einen Transceiver 22 mit RFID-Antenne 24 zum Senden und Empfangen von RFID-Signalen sowie eine RFID-Auswertungseinheit 26 zu deren Erzeugung und Auswertung. Die Auswertungseinheit 14 und die RFID-Auswertungseinheit 26 können einzeln oder gemeinsam ausgebildet sein. Die RFID-Kommunikation erfolgt vorzugsweise gemäß einem bekannten RFID-Protokoll, und die dafür erforderlichen Verfahren und Komponenten sind an sich verfügbar und werden ebenso wie der über die sehr groben Funktionsblöcke der Figur 4 hinausgehende genaue Aufbau der RFID-Leseeinrichtung 20 als bekannt vorausgesetzt. Sofern ein Objekt 104 einen Objekt-RFID-Transponder 110 trägt, kann dieser mittels der RFID-Leseeinrichtung 20 ausgelesen werden, um das Objekt 104 zu identifizieren.

Die RFID-Leseeinrichtung 20 dient der Ergänzung der erläuterten Anwesenheitserkennung von Objekten 104 mittels Mikrowellenresonanz oder kapazitiver Erfassung, obwohl Sensorelement 12 und Auswertungseinheit 14 der Übersicht halber in Figur 4 nicht gezeigt sind. Per RFID können Informationen des Objekts 104 übertragen werden, die anders gar nicht erkennbar sind.

RFID ist aber auch dazu geeignet, die Anwesenheit eines Objekts 104 auf einem Förderelement 102 festzustellen. Auch das ist als Ergänzung zur Mikrowellenresonanz oder kapazitiver Erfassung gedacht. Prinzipiell könnte aber auch RFID allein, ohne Sensorelement 12, die Überwachung der Förderelemente 102 auf deren Belegung mit Objekten 104 leisten.

Um die Position eines Objekts 104 zu bestimmen, ist die RFID-Leseeinrichtung 20 vorzugsweise in der Lage, zusätzlich zur Erfassung und gegebenenfalls Veränderung der auf dem Objekt-RFID-Transponder 110 abgelegten eigentlichen RFID-Informationen, auch Orts- oder Geschwindigkeitsinformationen des RFID-Transponders 110 zu erfassen. Dazu werden Eigenschaften der Trägerwelle selbst ausgewertet, also das RFID-Signal, und nicht die auf dem RFID-Transponder 12 gespeicherten und in das RFID-Signal codierten RFID-Informationen. Beispiele hierfür sind Phasenmessungen, Auswertungen des Pegels (RSSI) oder Messungen des Dopplereffekts.

Wie die RFID-Kommunikation an sich ist auch die Erfassung von Orts- oder Geschwindigkeitsinformationen mittels RFID bekannt und wird deshalb nicht genauer beschrieben. Allerdings ist die Genauigkeit solcher Informationen regelmäßig nicht hoch genug, um festzustellen, ob sich der RFID-Transponder 110 auf einem bestimmten Förderelement 102 befindet.

Deshalb ist auf dem Förderelement 102 mindestens ein Positions-RFID-Transponder 28 vorgesehen, vorzugsweise unter der Oberfläche eingebettet. Aus der RFID-Information des Positions-RFID-Transponders kann die RFID-Leseeinrichtung 20 erkennen, dass es sich um einen solchen handelt, und die zugehörige Position, insbesondere Identität des Förderelements 102, ist der RFID-Leseeinrichtung 20 bekannt oder wird ebenfalls mittels RFID ausgelesen. Damit hat die RFID-Leseeinrichtung 20 eine Referenz für Phase, RSSI oder sonstige zur Lokalisierung verwendeten Größen, die mit denjenigen eines Objekt-RFID-Transponders 110 verglichen werden.

Damit können dann mit ausreichender Genauigkeit Bedingungen an den Objekt-RFID-Transponder 110 gestellt werden, etwa dass er sich in X-Richtung und Y-Richtung zwischen den beiden in Figur 4 gezeigten Positions-RFID-Transpondern 28 befinden muss. In anderen Ausführungsformen sind mehr oder weniger Positions-RFID-Transponder 28 auch an anderen Positionen denkbar, etwa an allen vier Ecken oder einer in der Mitte oder an anderer bekannter Position mit entsprechenden Abständen zu den Kanten des Förderelements 102, die ein Objekt-RFID-Transponder 110 einhalten muss, um als auf dem Förderelement 102 lokalisiert zu gelten. Es kann auch genügen, nur Positionsbedingungen in Förderrichtung zu prüfen, da es für die Belegung eines Förderelements 102 auf die Querrichtung nicht ankommt. Über einen Vergleich der Geschwindigkeit des Objekt-RFID-Transponders 110 mit der Fördergeschwindigkeit lässt sich auch noch ausschließen, dass versehentlich Transponder gelesen wurden, die gar nicht zu Objekten auf der Fördereinrichtung 100 gehören.

## Patentansprüche

1. Sensor (10) und Förderelement (102) für eine Fördereinrichtung (100) mit Objekten (104) auf einer Vielzahl von hintereinander bewegten Förderelementen (102) jeweils mit einer Ausschleuseeinrichtung (108) zum gezielten Entfernen des Objekts (104) von einem Förderelement (102), wobei der Sensor (10) ein Sensorelement (12), sowie eine Auswertungseinheit (14) für Signale des Sensorelements (12) aufweist,
**dadurch gekennzeichnet,**
**dass** das Sensorelement (12) in das Förderelement (102) integriert ist, dass das Förderelement (102) einen Gurt für eine Bewegung quer zu einer Bewegungsrichtung (106) der Fördereinrichtung (100) aufweist, oder eine Schale aufweist, dass das Sensorelement (12) einen Resonator (16) zum Erfassen einer Mikrowellenresonanz umfasst und dass die Auswertungseinheit (14) zum Erkennen von auf dem Förderelement (102) befindlichen Objekten (104) anhand von Änderungen der Resonanzeigenschaften ausgebildet ist.

2. Sensor (10) nach Anspruch 1,
wobei auch die Auswertungseinheit (14) in das Förderelement (102) integriert ist.

3. Sensor (10) nach Anspruch 1 oder 2,
wobei die Fördereinrichtung (100) ein Crossbelt-Sortierer ist und das Sensorelement (12) unter dem Gurt angeordnet ist.

4. Sensor (10) nach Anspruch 1 oder 2,
wobei die Fördereinrichtung (100) ein Schalensortierer ist und das Sensorelement (12) zumindest einen Teil der Auflagefläche der Schale bildet.

5. Sensor (10) nach einem der vorhergehenden Ansprüche,
wobei das Sensorelement (12) eine Flexleiterplatine aufweist.

6. Sensor (10) nach einem der vorhergehenden Ansprüche,
wobei das Sensorelement (12) mindestens eine mäandrierende oder ineinander verzahnte leitende Struktur aufweist.

7. Sensor (10) nach einem der vorhergehenden Ansprüche,
wobei das Sensorelement (12) mehrere Resonatoren (16) oder Elektroden (18) aufweist.

8. Sensor (10) nach einem der vorhergehenden Ansprüche,
wobei das Sensorelement (12) flach ist und eine Ausdehnung entsprechend einem Anteil von zumindest 20 % oder zumindest 50 % der Fläche des Förderelements (102) aufweist.

9. Sensor (10) nach einem der vorhergehenden Ansprüche,
der eine in das Förderelement (102) integrierte RFID-Leseeinrichtung (20) zum Kommunizieren mit RFID-Transpondern (28, 110) über ein RFID-Signal umfasst.

10. Sensor (10) nach Anspruch 9,
wobei an den Förderelementen (102) mindestens ein Positions-RFID-Transponder (28) angeordnet ist, und wobei die Auswertungseinheit (14, 26) dafür ausgebildet ist, anhand des RFID-Signals mindestens eine Orts- und/oder Geschwindigkeitsgröße eines RFID-Transponders (28, 110) zu bestimmen, um mit Hilfe der Positions-RFID-Transponder (28) festzustellen, ob sich ein gelesener, an einem Objekt (104) befindlicher Objekt-RFID-Transponder (110) auf dem Förderelement (102) befindet.

11. Als Crossbelt-Sortierer oder Schalensortierer ausgebildete Fördereinrichtung (100) mit einer Vielzahl von Förderelementen (102) jeweils mit einer Ausschleuseeinrichtung (108) zum gezielten Entfernen des Objekts (104) von einem Förderelement (102), wobei mindestens ein Förderelement (102) einen Sensor (10) nach einem der vorhergehenden Ansprüche aufweist.

12. Verfahren zum Erfassen von Objekten (104) auf einer Vielzahl von hintereinander bewegten Förderelemente (102) einer Fördereinrichtung (100), wobei die Objekte (104) jeweils in einer bestimmten Förderposition mittels einer Ausschleuseeinrichtung (108) der Förderelemente (102) gezielt von einem jeweiligen Förderelement (102) entfernt werden, wobei die Objekte (104) von einem Sensorelement (12) erfasst werden, das in die Fördereinrichtung (100) integriert ist und dessen Signale ausgewertet werden,
**dadurch gekennzeichnet,**
**dass** die Fördereinrichtung ein Crossbelt-Sortierer, dessen Förderelemente (102) einen Gurt für eine Bewegung quer zu einer Bewegungsrichtung (106) der Fördereinrichtung (100) aufweisen, oder ein Schalensortierer ist, dessen Förderelemente (102) eine Schale aufweisen, und dass das Sensorelement (12) als Resonator (16) zum Erfassen einer Mikrowellenresonanz in ein Förderelement (102) integriert ist und auf dem Förderelement (102) befindliche Objekte (104) anhand von Änderungen der Resonanzeigenschaften erkannt werden.

## Claims

1. Sensor (10) and conveying element (102) for a conveying device (100) with objects (104) on a plurality of conveying elements (102) moved one behind the other, each having a discharge device (108) for selective removal of the object (104) from a conveying element (102), the sensor (10) having a sensor element (12) and an evaluation unit (14) for signals from the sensor element (12),
**characterized in that** the sensor element (12) is integrated into the conveying element (102), **in that** the conveying element (102) comprises a belt for movement transversely to a direction of movement (106) of the conveying device (100) or a tray, **in that** the sensor element (12) comprises a resonator (16) for detecting a microwave resonance, and **in that** the evaluation unit (14) is configured for detecting objects (104) on the conveying element (102) on the basis of changes in the resonance properties.

2. Sensor (10) according to claim 1,
wherein the evaluation unit (14) is also integrated into the conveying element (102).

3. Sensor (10) according to claim 1 or 2,
wherein the conveyor (100) is a crossbelt sorter and the sensor element (12) is disposed under the belt.

4. Sensor (10) according to claim 1 or 2,
wherein the conveying device (100) is a tray sorter and the sensor element (12) forms at least part of the bearing surface of the tray.

5. Sensor (10) according to one of the preceding claims,
wherein the sensor element (12) comprises a flex conductor board.

6. Sensor (10) according to one of the preceding claims,
wherein the sensor element (12) has at least one meandering or interlocked conductive structure.

7. Sensor (10) according to one of the preceding claims,
wherein the sensor element (12) comprises a plurality of resonators (16) or electrodes (18).

8. Sensor (10) according to one of the preceding claims,
wherein the sensor element (12) is flat and has an expansion corresponding to at least 20% or at least 50% of the area of the conveying element (102).

9. Sensor (10) according to one of the preceding claims,
comprising an RFID reader (20) integrated in the conveyor element (102) for communicating with RFID transponders (28, 110) via an RFID signal.

10. Sensor (10) according to claim 9,
wherein at least one position RFID transponder (28) is arranged on the conveyor elements (102), and wherein the evaluation unit (14, 26) is configured to determine at least one location and/or speed variable of an RFID transponder (28, 110) on the basis of the RFID signal, in order to determine with the aid of the position RFID transponder (28) whether a read object RFID transponder (110) located on an object (104) is located on the conveyor element (102).

11. Conveying device (100) configured as a crossbelt sorter or tray sorter having a plurality of conveying elements (102) each with a discharge device (108) for the selective removal of the object (104) from a conveying element (102), at least one conveying element (102) having a sensor (10) according to one of the preceding claims.

12. Method for detecting objects (104) on a plurality of conveyor elements (102) of a conveyor device (100) which are moved one behind the other, the objects (104) each being selectively removed from a respective conveyor element (102) in a specific conveying position by means of a discharge device (108) of the conveyor elements (102), the objects (104) being detected by a sensor element (12) which is integrated into the conveyor device (100) and whose signals are evaluated,
**characterized in that** the conveying device is a crossbelt sorter, whose conveying elements (102) have a belt for movement transversely to a direction of movement (106) of the conveying device (100), or is a tray sorter, whose conveying elements (102) have a tray, and **in that** the sensor element (12) is integrated in a conveying element (102) as a resonator (16) for detecting a microwave resonance, and objects (104) positioned on the conveying element (102) are detected on the basis of changes in the resonance properties.

## Revendications

1. Capteur (10) et élément de transport (102) pour un dispositif de transport (100) comprenant des objets (104) sur une multitude d'éléments de transport (102) déplacés les uns derrière les autres et comprenant chacun un dispositif d'éjection (108) pour l'enlèvement ciblé de l'objet (104) depuis un élément de transport (102), le capteur (10) comprenant un élément capteur (12) et une unité d'évaluation (14) pour des signaux de l'élément capteur (12),
**caractérisés en ce que**
l'élément capteur (12) est intégré dans l'élément de transport (102), **en ce que** l'élément de transport (102) comprend une bande pour un déplacement transversal à une direction de déplacement (106) du dispositif de transport (100), ou comprend une coque, **en ce que** l'élément capteur (12) comprend un résonateur (16) pour détecter une résonance micro-onde, et **en ce que** l'unité d'évaluation (14) est réalisée pour détecter des objets (104) situés sur l'élément de transport (102) en se basant sur des changements dans les propriétés de résonance.

2. Capteur (10) selon la revendication 1,
dans lequel l'unité d'évaluation (14) est également intégrée dans l'élément de transport (102).

3. Capteur (10) selon la revendication 1 ou 2,
dans lequel le dispositif de transport (100) est une trieuse transversale et l'élément capteur (12) est disposé sous la bande.

4. Capteur (10) selon la revendication 1 ou 2,
dans lequel le dispositif de transport (100) est une trieuse à coque, et l'élément capteur (12) forme au moins une partie de la surface d'appui de la coque.

5. Capteur (10) selon l'une des revendications précédentes,
dans lequel l'élément capteur (12) comprend une carte à circuits flexible.

6. Capteur (10) selon l'une des revendications précédentes,
dans lequel l'élément capteur (12) possède au moins une structure conductrice en méandres ou imbriquée.

7. Capteur (10) selon l'une des revendications précédentes,
dans lequel l'élément capteur (12) comprend plusieurs résonateurs (16) ou électrodes (18).

8. Capteur (10) selon l'une des revendications précédentes,
dans lequel l'élément capteur (12) est plat et présente une extension correspondant à une part d'au moins 20 % ou d'au moins 50 % de la surface de l'élément de transport (102).

9. Capteur (10) selon l'une des revendications précédentes,
comportant un lecteur RFID (20) intégré dans l'élément de transport (102) pour communiquer avec des transpondeurs RFID (28, 110) via un signal RFID.

10. Capteur (10) selon la revendication 9,
dans lequel au moins un transpondeur RFID de position (28) est disposé sur les éléments de transport (102), et
l'unité d'évaluation (14, 26) est réalisée pour déterminer au moins une grandeur de localité et/ou de vitesse d'un transpondeur RFID (28, 110) en se basant sur le signal RFID, afin de constater à l'aide des transpondeurs RFID de position (28) si un transpondeur RFID d'objet (110) lu et situé sur un objet (104) se situe sur l'élément de transport (102).

11. Dispositif de transport (100) réalisé sous forme de trieuse transversale ou de trieuse à coque, comportant une multitude d'éléments de transport (102) comprenant chacun un dispositif d'éjection (108) pour l'enlèvement ciblé de l'objet (104) depuis un élément de transport (102), au moins un élément de transport (102) comprenant un capteur (10) selon l'une des revendications précédentes.

12. Procédé pour détecter des objets (104) sur une multitude d'éléments de transport (102) d'un dispositif de transport (100) déplacés les uns derrière les autres, dans lequel dans une position de transport déterminée respective, les objets (104) sont enlevés de façon ciblée depuis un élément de transport respectif (102) à l'aide d'un dispositif d'éjection (108) des éléments de transport (102), les objets (104) étant détectés par un élément capteur (12) qui est intégré dans le dispositif de transport (100) et dont les signaux sont évalués,
**caractérisé en ce que**
le dispositif de transport est une trieuse transversale dont les éléments de transport (102) présentent une bande pour un déplacement transversal à une direction de déplacement (106) du dispositif de transport (100), ou bien il est une trieuse à coque dont les éléments de transport (102) présentent une coque, et **en ce que** l'élément capteur (12) est intégré dans un élément de transport (102) à titre de résonateur (16) pour détecter une résonance micro-onde, et des objets (104) situés sur l'élément de transport (102) sont détectés en se basant sur des changements dans les propriétés de résonance.
